Europäisches Patentamt

European Patent Office

Office européen des brevets

(11) Publication number: **0 425 465 A1**

## EUROPEAN PATENT APPLICATION

(21) Application number: 90850360.0

(22) Date of filing: 26.10.90

(51) Int. Cl.⁵: **C22F 1/18, G21C 3/06**

(30) Priority: **27.10.89 SE 8903595**

(43) Date of publication of application:
**02.05.91 Bulletin 91/18**

(84) Designated Contracting States:
**DE FR GB IT**

(71) Applicant: **SANDVIK AKTIEBOLAG**

**S-811 81 Sandviken 1(SE)**

(72) Inventor: **Andersson, Thomas**
**Stängselvägen 47**
**S-811 35 Sandviken(SE)**

(74) Representative: **Östlund, Alf Olof Anders et al**
**Sandvik AB Patent Department**
**S-811 81 Sandviken(SE)**

(54) A method of manufacturing cladding tubes for fuel rods for nuclear reactors.

(57) The invention relates to a method of making cladding tubes of zirconium alloys. According to the invention an improved resistance towards nodular corrosion under operating conditions in boiling water nuclear reactors can be achieved by carrying out a beta-quenching step, prior to the final cold rolling step, by heating 5-50% of the outer portion of the tube wall to a temperature in the beta-phase region and therafter rapidly cooling the tube.

# A METHOD OF MANUFACTURING CLADDING TUBES FOR FUEL RODS FOR NUCLEAR REACTORS.

This invention relates to a method for making cladding tubes of a zirconium-based alloy for fuel rods to nuclear reactors. In particular, the invention relates to a zirconium-based alloy having high resistance to nodular corrosion. Of prime importance for cladding tubes of zirconium-based alloys for fuel rods for nuclear reactors is the resistance to corrosion under the operating conditions prevailing in a nuclear reactor. In boiling water reactors, BWR, the cladding tube is primarily subjected to a un-uniform type of corrosion, so-called nodular corrosion , which is related to oxygen content in the coolant. The development proceeds towards an increasingly higher utilization of the fuel, which means longer operating times for the fuel assemblies. The cladding material will therefore be subjected to the corrosive water for a longer period of time than what has been normal previously, which results in an increased risk of corrosion damage, mainly nodular corrosion damage. It has therefore been a desire to achievebetter corrosion properties in the alloys used without this involving unfavourable changes of the mechanical properties and of the microstructure .

Typical examples of zirconium-based alloys for cladding tubes to nuclear reactors include "Zircaloy-2" (a zirconium alloy containing about 1.5% Sn by weight, about 0.1% Fe, about 0.1% Cr and about 0.05% Ni) and "Zircaloy-4" (a zirconium alloy containing about 1.5% Sn by weight, about 0.2% Fe and about 0.1% Cr). The production method for these Zr-based alloys are disclosed in US patent 3, 385, 365 and US patent 4, 238, 251. In comparison with the conventional method of making cladding tubes, the method of US patent 3, 865, 365 improves the creep strength , whereas the method of US 4, 238, 251 improves the nodular corrosion resistance , in both cases by means of a modification of the manufacturing procedure.

The conventional method of making cladding tubes of the Zirconium-based alloys "Zircaloy" for fuel rods for nuclear reactors is as follows;

After melting and casting of the material into an ingot, the material is forged to bar size and the bar is subjected to so-called beta-quenching, which means heating to a temperature in the beta-range and quenching in water to room temperature. Then hot extrusion is made in the alpha-range, after which cold working is done in the form of a series of pilger rollings with intermediate annealings in the alpha-range between the cold rolling steps. The conventional method of making cladding tubes results in a desirable strength/ductility combination but suffer from insufficient resistance to nodular corrosion when the fuel rods are subjected to long exposure times.

US patent 3,865,365 is directed to a method of making cladding tubes of a zirconium-based alloy, "Zircaloy", for fuel rods for nuclear reactors. In the production of "Zircaloy" tubes according to US patent 3,865,635, melted and cast ingots of the material are forged in the alpha-range followed by beta-quenching. Then hot extrusion is made in the alpha-range, after which the material is cold worked to final dimension, in which the cold working includes several steps with intermediate recrystallization annealings, the improved procedure which consists in heating the material, before the last cold working step , to the beta-range and then cooling it to room temperature. Publication ASTM STP 754 pp. 75-95, 1982 shows that the method disclosed in US patent 3, 865, 635 in addition to improved creep strength also results in improved nodular corrosion resistance . In accordance with this method, however, the microstructure of the resulting tube is uneven with a mixture of coarse and fine crystal grains resulting is a reduction of the ductility.

US patent 4, 238, 251 discloses a method in which the alloy after hot working and cold working with intermediate vacuum anneals to final product is heated to a temperature in the $(\alpha + \beta)$ or $\beta$-range. In accordance with this method the microstructure is extremely coarse, of the type quenched Widmanstätten structure, and the ductility is very low. Furthermore, the heating and cooling steps of the final product are difficult to control and problems with residual stresses and removal of oxides formed in the heat-treatment process develop.

There is a strong desire to improve the nodular corrosion resistance of zirconium-based cladding tube for fuel rods for nuclear reactors without sacrificing other properties including microstructure, strength and ductility of the tubes made from such alloys. Differences in corrosion resistance between the inner surface and the outer surface of a cladding tube can be produced in different ways. For instance corrosion resistance of the outer surface can be improved by plating or by producing a co-extruded composite tube. Such techniques are costly and it is desirable to make a zirconium-based alloy tube of uniform chemical composition with improved resistance to nodular corrosion.

Summary of the invention

According to the present invention, it has proved to be possible to manufacture cladding tubes for fuel rods for nuclear reactors having at least as good resistance to nodular corrosion as the preciously known cladding tubes and at the same time keeping the good combination of ductility and strength typical of conventionally produced cladding tubes.

The invention relates to a method of making a cladding tube of a zirconium-based alloy for fuel rods for nuclear reactors, the zirconium based alloy being extruded and the extruded product being subjected to multiple cold rollings and annealing, intermediate annealing, between two consecutive cold rolling and a β-quenching of an outer portion of the tube wall prior to the final cold rolling.

The extrusion can be carried out at an arbitary temperature in the α-phase.

The β-quenching of an outer portion of the tube wall prior to the final cold rolling is carried out by heating 5-50% and preferably 10-30% of the outer portion of the tube wall to a temperature in the β-phase region, suitably to a temperature of 950-1250°C and preferably to a temperature of 1000-1150°C and thereafter rapidly cooling the tube to room temperature. The outer portion of the tube wall is heated by passing the tube through an induction coil inserted in a chamber with flowing gas to protect the outer surface from oxidation. Furthermore, the inner surface is cooled preferably with a cooling rate exceeding 100°C/min by flushing water inside the tube to maintain the temperature of the inner portion of the tube wall sufficiently low suitably below 90°C so that no metallurgical changes occur at the inner portion of the tube wall and to allow a cooling rate when the tube has passed the induction coil sufficiently high to transform the β-phase into a structure of α-grains with a fine distribution of intermetallic particles in the α-grain boundaries and thereby improve the resistance to nodular corrosion.

The zirconium-based alloy is preferably subjected to final cold rolling immediately after the β-quencing of an outer portion of the tube wall. However, it is possible to introduce a vacuum annealing at 400 to 650°C prior to the final cold rolling.

After the last cold rolling, the product is subjected to final annealing at a temperature of 400-650°C, preferably at a temperature of 550-600°C.

The zirconium-based alloy preferably consist of the alloys known under the trade names Zircaloy-2 and Zircaloy-4, whose contents of alloying elements lie within the limits 1.2-1.7% Sn, 0.07-0.24% Fe, 0.05-0.15% Cr and O-0.08% Ni, the balance being zirconium and any existing impurities of ordinary kind, the percentages stated referring to percentage by weight.

The zirconium-based alloy is preferably subjected to β-quenching prior to extrusion, that is, it is heated to a temperature in the β-phase region and rapidly cooled to a temperature in the α-phase region. However, it is possible to use the zirconium-based alloy without it being subjected to β-quenching prior to extrusion. β-quenching prior to extrusion is carried out by heating the alloy to a temperature of suitably 950-1250°C and of preferably 1000-1150°C and by rapidly cooling it to room temperature.

Example 1

An ingot of Zircaloy-2 was forged into a rod with a dimension of about 150 mm. The rod was subjected to β-quenching by heating it to a temperature of 1050°C for 15 min and cooling it in agitated water to room temperature. Extrusion billets were machined and clad with copper outside and inside. The billets were extruded in the α-phase range at a temperature of 670-710°C. After removal of the copper clad, the extruded tube was then cold rolled in a pilger mill in 2 successive passes to the tube hollow size prior to the final cold rolling. After each reduction pass, the tube hollow was vacuum annealed at about 650°C for 1 hour. The twice cold rolled and vacuum annealed tube hollow was conveyed through an induction coil by an axial feeding and rotation mechanism. Water was passed through the interior of the tube hollow at a rate of about 16 l/min. The induction coil was energized by a 80 KW 0.4 MHz power unit. The outer surface of the tube hollow within the induction coil was heated to a temperature of about 1060°C for about 10 sec implying that about 20% of the outer portion of the tube hollow transformed to β-phase. After having passed through the coil the tube hollow was cooled by the flushing water inside to 100°C in less than 5 sec. The such partially β-quenched tube hollow was cold pilgered to final cladding tube size having about 12.3 mm outside diameter and a wall thickness of about 0.8 mm. The final sized cladding tube was final vacuum annealed at 565°C.

Tube samples of finished cladding tubes manufactured according to the present invention were steam corrosion tested at 500°C for 24 hours. For comparison tube samples of tubing manufactured according to the conventionel method were tested for comparison. This test has proved to simulate well the conditions in boiling water reactor operation. The cladding tube samples manufactured according to the present invention exhibited for the outer surface weight gains in the range 60 to 70 mg/dm², whereas the weight gains for the outer surface of the conventionally produced tubes were in the range 300-3000 mg/dm².

Tube samples of finished cladding tubes manufactured according to the present invention were also tensile tested at 300°C together with tube samples of conventional production. The following results show that both types of tubes have almost the same strength and ductility levels.

| Property | Tube according to the invention | | Conventionally manufactured tubes | |
|---|---|---|---|---|
| Tensile Strength, N/mm² | 320 | 325 | 300 | 296 |
| Elongation, % | 41 | 40 | 42 | 45 |

Based on the fact that the inner surface and an inner portion of the tube wall to a depth of at least 50% of the total wall is retained at a low temperature in the $\alpha$-phase range throughout the application of this invention, there are no significant microstructural changes in this area. This means that the invention is applicable also to tubes having different kinds of internal components, for instance pure Zr or a Zr-based alloy having a small addition of Sn of up to 0.5 wt %., providing an inner barrier for resisting various service effects in a nuclear reactor. Such cladding, referred to as barrier cladding or liner cladding, is preferably bonded to each other via co-extrusion of the two components.

**Claims**

1. A method of making cladding tubes for fuel rods of a zirconium alloy containing 1.2 to 1.7 wt% Sn, 0.07 to 0.24 wt% Fe, 0.05 to 0.15 wt% Cr, 0 to 0.08 wt% Ni and the balance essentially zirconium and ordinary impurities for the purpose of improving the resistance to nodular corrosion under operating conditions in boiling water nuclear reactors without or with a barrier of zirconium having a Sn addition of 0 to 0.5 wt% bonded to its inside surface including the steps of:

(a) extruding a perforated billet of the zirconium-based alloy within the $\alpha$-phase range for obtaining a tube,

(b) cold rolling the tube with multiple cold working passes to the size for the final cold rolling and annealing the tube at a temperature in the $\alpha$-phase range subsequent to each cold rolling pass,

(c) heating an outer portion of the tube wall to the $\beta$-phase range for a time sufficient to transform the outer portion of the tube wall to $\beta$-phase while cooling the inner portion of the tube wall at a temperature sufficiently low that essentially no metallurgical changes occur at the inner portion of the tube wall and then cooling the tube sufficiently rapidly to transform the $\beta$-phase into a structure of $\alpha$-grains with a fine distribution of intermetallic particles in the $\alpha$-grain bounderies and thereby improve the resistance to nodular corrosion.

(d) cold rolling the thus partially $\beta$-quenched tube to the final cladding tube size,

(e) annealing the cold rolled tube at a temperature of 400-650° C.

2. A method according to claim 1, including an initial $\beta$-quenching of the zirconium-based alloy prior to its extrusion into an extruded product.

3. A method according to claim 1, wherein the outer portion of the tube wall in the $\beta$-quenching process is heated at least to a temperature of 950° C.

4. A method according to claim 1, wherein the outer portion of the tube wall in the $\beta$-quenching process is heated at least to a temperature of 950° C to a depth of 5-50% of the total tube wall.

5. A method according to claim 1, wherein the inner portion of the tube wall in the $\beta$-quenching process is cooled by continuously flushing coolant through the interior of the tube while the outer portion of the tube wall is heated to the $\beta$-phase range.

6. A method according to claim 1, wherein the tube in the $\beta$-quenching process is cooled following heating with a cooling rate exceeding 100° C/min by flushing coolant through the interior of the tube.

7. A method according to claim 1, wherein the temperature of the inner surface in the $\beta$-quenching process does not exceed 90° C.

8. A method according to claim 1, wherein the outer surface of the tube in the $\beta$-quenching process is protected from oxidation by flushing an inert gas outside the tube.

9. A method according to claim 1, including an annealing at 400-650° of the partially $\beta$-quenched tube prior to its last cold rolling to final cladding tube size.

10. A method according to claim 1, wherein the $\beta$-quenching of an outer portion of the tube wall, prior to final cold rolling, is carried out by heating said outer wall to a temperature of 950°-1250° C.

11. A method according to claim 10, wherein the outer portion of the tube wall in the $\beta$-quenching process is heated to 1000-1150°C.

12. A method according to claim 4, wherein the outer portion of the tube wall in the $\beta$-quenching process is heated at least to a temperature of 950°C to a depth of 10-30% of the outer portion of the tube wall.

13. A method according to claim 1 wherein the annealing of the cold rolled tube is carried out at a temperature of 550-600°C.

European
Patent Office

**EUROPEAN SEARCH
REPORT**

Application Number

**EP 90 85 0360**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 118 573 (GENERAL ELECTRIC CO.) <br> * Claims 1-4,8-19 * | 1-7,9-13 | C 22 F <br> 1/18 <br> G 21 C 3/06 |
| Y | EP-A-0 085 552 (WESTINGHOUSE ELECTRIC CORP.) <br> * Claims 1-6,8,9; page 2, line 5 - page 3, line 22; page 6, line 15 - page 7, line 24; page 13, lines 25-35 * | 1,4-7, 9-13 | |
| D,Y | US-A-3 865 635 (A.S.B. HOFVENSTAM et al.) <br> * Column 2, lines 44-55; claims 1-3 * | 1-3 | |
| A | DE-A-2 951 096 (GENERAL ELECTRIC CO.) <br> * Claims 1-5 * | 1 | |
| D,A | US-A-4 238 251 (GENERAL ELECTRIC CO.) <br> * Claim 1 * | 1 | |
| A | EP-A-0 198 570 (WESTINGHOUSE ELECTRIC CRP.) <br> * Abstract; figure 1 * | 1 | |

|  |
|---|
| TECHNICAL FIELDS SEARCHED (Int. Cl.5) |
| C 22 F <br> G 21 C |

The present search report has been drawn up for all claims

| Place of search | Date of completion of search | Examiner |
|---|---|---|
| The Hague | 28 January 91 | GREGG N.R. |